# EUROPÄISCHE PATENTSCHRIFT

(11) **EP 0 789 235 B1**
(45) Veröffentlichungstag und Bekanntmachung des Hinweises auf die Patenterteilung: **29.09.2004**
(21) Anmeldenummer: 97107486.9
(22) Anmeldetag: 27.08.1992
(51) Int. Cl.: G01M 3/32

(54) **Prüfung von Behältnissen**
Testing receptacles
Essai de récipients

(43) Veröffentlichungstag der Anmeldung: 13.08.1997
(62) Teilanmeldung aus: 92917546.1
(73) Patentinhaber: Lehmann, Martin, CH-5610 Wohlen 1 (CH)
(72) Erfinder: Lehmann, Martin, CH-5610 Wohlen 1 (CH)
(74) Vertreter: Troesch Scheidegger Werner AG

(56) Entgegenhaltungen:
- EP-A- 0 313 678
- EP-A- 0 460 511
- DE-B- 1 031 030
- US-A- 4 459 843
- US-A- 4 542 643

## Beschreibung

Die vorliegende Erfindung betrifft ein Verfahren nach dem Oberbegriff von Anspruch 1.

Die vorliegende Erfindung bezieht sich auf eine Prüfanordnung, wie sie aus der US-PS-5 029 464 bzw. der EP-A-0 313 678 bzw. der EP-A-0 432 143 bekannt ist.

Daraus ist es bekannt, zur Dichteprüfung von Behältnissen zwischen einem Druck im Inneren des Behältnisses und einem Druck in seiner Umgebung eine Druckdifferenz zu erstellen und aus dem Verhalten eines der Drucke darauf zu schliessen, ob das in Prüfung befindliche Behältnis vorgegebenen Dichtebedingungen oder Volumenbedingungen genügt oder nicht.

Dabei wird das zu prüfende Behältnis in eine dichtende Kammer eingelegt, welche mit einer Druckmediumsquelle oder Saugquelle verbunden ist, womit die erwähnte Druckdifferenz erstellt wird. Nach Erstellen der Druckdifferenz, als Anfangsbedingung, wird ein Druckwert der Behältnisumgebung in einer Referenzdruckkammer, einem Differenzdrucksensor vorgeschaltet, abgespeichert und mit nachfolgenden Druckwerten der Behältnisumgebung verglichen.

Nachteilig an dem vorbekannten Vorgehen ist, dass ein Differenzdrucksensor vorgesehen werden muss, mit höchst präzis arbeitenden Steuerventilen, zur Sicherstellung der Erfassung auch geringster Leckagen bzw. geringer Abweichungen des Behältnisvolumens von einem SOLL-Volumen.

Aus der DE-B-1 031 030 ist es bekannt, die Undichtigkeit von Bauelementen dadurch zu prüfen, dass diese erst einer Druckdifferenz ausgesetzt werden. Danach wird das Ausgangssignal eines als Sensor wirkenden Vakuummeters an einem Kondensator gespeichert. Der Eingang einer als Vergleichseinheit wirkenden Gasentladungsröhre wird nach einer Zeitspanne von etwa 1 Sekunde mit der Differenz des dann vorherrschenden Ausgangssignals des Vakuummeters und dem Signal am Kondensator beaufschlagt.

Ausgehend von einem Verfahren bzw. einer Prüfanordnung letztgenannter Art ist es Aufgabe der vorliegenden Erfindung, zu Beginn der Differenzauswertung ein definiertes Signal am Ausgang der Vergleichseinheit bereitzustellen.

Es wird kein Differenzdrucksensor mehr eingesetzt, ebenso wenig wie pneumatische Speicherkammern, sondern es wird der interessierende Druck mittels eines Relativdrucksensors erfasst, in ein elektrisches Signal gewandelt, dieses - bei der Leckageprüfung - zu vorgegebener Zeit abgespeichert und mit mindestens einem nachfolgenden, durch denselben Sensor erfassten Wert verglichen. Bei der Volumenprüfung wird ein Druckwert als Vergleichsbasis vorgegeben und abgespeichert. Dadurch entfallen heikle Aggregate der vorbekannten Anordnung, nämlich der Differenzdrucksensor und insbesondere auch die bezüglich Steuercharakteristik anspruchsvollen Absperrventile.

Bevorzugterweise wird sowohl der Quellenanschluss zur Druckmediumsbeaufschlagung bzw. zum Saugen wie auch der Sensoreingang, sei dies mit dem Behältnisinneren oder mit der Behältnisumgebung, verbunden werden.

Die Erstellung der Druckdifferenz kann auf verschiedene, dem Fachmann auch aufgrund der erwähnten Schriften durchaus geläufige Weisen erfolgen. So kann beispielsweise mit vorgegebener Beaufschlagungs- oder Saugleistung während einer vorgegebenen Zeit der Differenzdruck aufgebaut werden und darnach sowohl ein erreichter Druckwert wie auch sein Verlauf ausgewertet werden. Ebenso kann die Beaufschlagung auf eine vorgegebene Druckdifferenz erfolgen und darnach der Verlauf des interessierenden Druckwertes beobachtet werden.

Die Druckbeaufschlagung kann ebenfalls, wie aus den erwähnten Schriften bekannt, durch Voraufladen einer Vorkammer bis zu einem vorgegebenen Druck und darnach Entladen der erwähnten Kammer in das Behältnis oder in seine durch eine dichtend verschliessbare Kammer gebildete Umgebung erfolgen.

Bei der Volumenprüfung kann ein vom Volumen des Behältnisses abhängiges Volumen, sei dies dessen Innenvolumen selbst oder dessen Differenzvolumen zu einer Prüfkammer, mit einer vorgegebenen Druckmediumsmenge beaufschlagt werden, oder es kann diesem Volumen eine vorgegebene Gasmenge entzogen werden. Aus dem resultierenden Druck wird dann auf das Volumen des Behältnisses geschlossen.

Selbstverständlich werden die gemessenen Grössen mit SOLL-Grössen oder SOLL-Verläufen, wie ebenfalls aus den erwähnten Schriften bekannt, verglichen.

Bevorzugterweise wird die Abspeicherung so vorgenommen, dass, in einem vorgegebenen Zeitpunkt gesteuert, ein Analog/Digital-Wandler zur Wandlung des Sensorausgangssignals freigegeben wird und darnach das dann stationäre Ausgangssignal dieses Analog/Digital-Wandlers als Referenzwert für die nachfolgende Auswertung des Sensorausgangssignals eingesetzt wird. Dabei kann entweder ein weiterer Analog/Digital-Wandler dem Sensorausgang nachgeschaltet werden und dann das Ausgangssignal des letzterwähnten Wandlers mit demjenigen des Speicher-A/D-Wandlers digital verglichen werden, oder es wird, bevorzugterweise, dem Speicher-A/D-Wandler ein D/A-Wandler unmittelbar nachgeschaltet und damit das gespeicherte, rückgewandelte Signal als analoges Referenzsignal einer analogen Komparatoreinheit zugeführt, der auch direkt das Ausgangssignal des Sensors zugespiesen wird.

Im weiteren wird bevorzugterweise dadurch ein Null-Abgleich vorgenommen, dass, im wesentlichen während der Wertabspeicherung am Komparator, erfasst wird, ob ein Ausgangssignal der Anordnung den Nullwert mindestens genähert einnimmt; erscheint ein vom Nullwert oder von einem vorgegebenen Minimalwert abweichendes Signal, wird dieses als Null-Abgleichssignal eingesetzt.

Bevorzugte Ausführungsvarianten der erfindungsgemässen Anordnung sind in den Ansprüchen 12 bis 18 spezifiziert.

Die Erfindung wird anschliessend beispielsweise anhand von Figuren erläutert.

Es zeigen:
- Fig. 1: schematisch, eine erfindungsgemässe Anordnung, bei der Druckbeaufschlagungs- oder Saugquelle und Drucksensor mit der Behältnisumgebung verbunden sind;
- Fig. 2: ebenso schematisch wie Fig. 1, einen Ausschnitt der Anlage nach Fig. 1, in einer weiteren Ausführungsform;
- Fig. 3: in analoger Darstellung zu Fig. 2 den Ausschnitt in einer dritten Ausführungsvariante;
- Fig. 4: in analoger Darstellung zu Fig. 2, den Ausschnitt in einer weiteren bevorzugten Ausführungsform;
- Fig. 5: ein Funktionsblockdiagramm einer bevorzugten erfindungsgemässen Anlage zur Durchführung eines erfindungsgemässen Prüfverfahrens;
- Fig. 6: illustriert rein schematisch den Verlauf einer Messkurve.

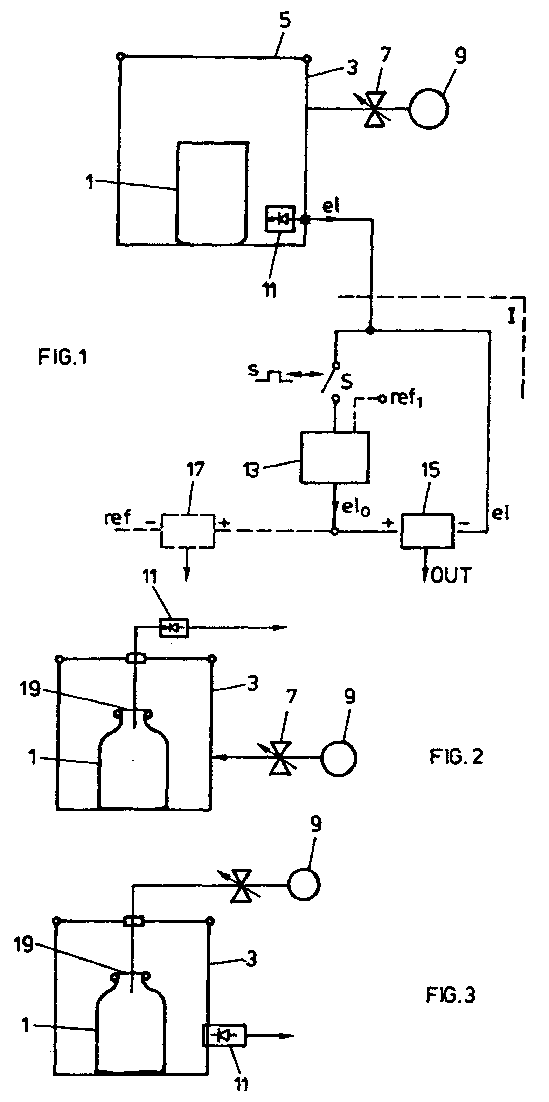

In Fig. 1 ist, wie erwähnt schematisch, ein auf Lekkage oder auf sein Volumen zu prüfendes, geschlossenes Behältnis 1 dargestellt, welches beispielsweise bereits gefüllt sein kann und innerhalb einer Prüfkammer 3 liegt. Die Kammer 3 ist beispielsweise mittels eines Einlegedeckels 5 dichtend verschliessbar. Ueber ein gesteuertes Ventil 7 wird das Prüfvolumen, hier das Differenzvolumen zwischen Volumen der Kammer 3 und Behältnis 1, mittels einer Saug- oder Druckquelle 9 druckbeaufschlagt, derart, dass über der Wandung des Behältnisses 1 ein Druckgradient entsteht. Die Quelle 9 mündet bei dieser Ausführungsform in die Kammer 3 ein.

An oder in der Kammer 3 ist weiter ein Relativdrucksensor 11 vorgesehen, welcher die eingangsseitige Druckgrösse in ein elektrisches Ausgangssignal wandelt. Das elektrische Ausgangssignal el des Sensors 11 wird über eine Abspeichsteuerschaltung, wie schematisch bei S dargestellt, auf ein von einer Zeitsteuereinheit (nicht dargestellt) abgegebenes Steuersignal s hin, in eine Speichereinheit 13 abgespeichert. Als Druckreferenzwert ist das Ausgangssignal elₒ des Speichers 13 einer Komparatoreinheit 15 zugeführt. An ihrem zweiten Eingang liegt direkt das Ausgangssignal el des Sensors 11 an. Nach Abspeicherung des Referenzwertes elₒ wird an der Komparatoreinheit 15 der Verlauf des Druckes in der Kammer 3 verfolgt.

Es sei nun vorerst die Leckageprüfung betrachtet. Ist das Behältnis 1 dicht und wird die Abspeicherung im Speicher 13 erst vorgenommen, wenn allfällige druckdifferenzbedingte Formveränderungen am Behältnis 1 abgeklungen sind, so wird darnach das Sensorausgangssignal el auf dem abgespeicherten Wert elₒ bleiben. Ausgangsseitig des Komparators 15 wird durch ein mindestens genähert Null betragendes Vergleichsresultat angezeigt, dass das Behältnis 1 dicht ist.

Bei Vorhandensein von Leckagen am Behältnis 1 wird sich nach der erwähnten Abspeicherung des Referenzwertes elₒ der Signalwert el je nach Richtung des Druckgradienten über der Behältniswand verändern, mit desto höherer Veränderungsrate, je grösser die Leckage ist.

Vergleichen des Ausgangssignals der Komparatoreinheit 15 mit (nicht dargestellt) vorgegebenen SOLL-Werten ergibt einerseits die Information, ob eine Leckage vorhanden ist, und, anderseits, auch Information darüber, wie gross sie ist. Je nach zu prüfenden Behältnissen können kleinere Leckagen möglicherweise toleriert werden.

Ist die Leckage im Behältnis 1 gross, so wird sich über der Wandung des Behältnisses 1 gar keine Druckdifferenz aufbauen: Die Drucke zwischen Behältnisinnenraum und seiner Umgebung gleichen sich über die Leckage rasch aus. Dann würde aber ausgangsseitig des Komparators 15 ein Null-Signal erscheinen, also gleich wie im Falle eines dichten Behältnisses, und zu Prüfungsfehlern führen.

Deshalb wird, wie gestrichelt dargestellt, vorzugsweise nach der Abspeicherung des Wertes elₒ im Speicher 13, dieser abgespeicherte Wert an einer weiteren Komparatoreinheit 17 mit einem Referenzwert ref verglichen. Das Ausgangssignal der weiteren Komparatoreinheit 17 zeigt an, ob eine grosse Leckage vorhanden ist oder nicht. Sowohl wenn eine vorgegebene Druckmediumsmenge in die Kammer 3 eingelassen wird oder ihr eine vorgegebene Gasmenge entzogen wird, wird, bei grosser Leckage, der durch den Referenzwert ref angezeigte Druckwert nicht erreicht, womit das Prüfungsresultat am Behältnis 1 durch das Ausgangssignal des weiteren Komparators 17 angezeigt wird.

Für die Volumenprüfung wird der Kammer 3 eine vorgegebene Druckmediumsmenge zugespiesen bzw. Gasmenge entzogen. Der Speicher 13 wird, wie gestrichelt bei ref₁ dargestellt, hier als Referenzwertspeicher verwendet, in welchem Referenzwerte entsprechend den SOLL-Volumina zu prüfender Behältnisse vorabgespeichert werden. Durch Vergleich der erwähnten Volumenreferenzwerte ref₁ und des sich tatsächlich einstellenden Druckwertes entsprechend el in dem vom Innenvolumen des Behältnisses 1 abhängigen Differenzvolumen in der Kammer 3, d.h. aus dem Ausgangssignal der Komparatoreinheit 15, wird erkannt, ob das Behältnis 1 SOLL-Volumen aufweist oder nicht bzw. wie gross die IST-Volumen/SOLL-Volumen-Differenz ist.

Bei der Ausführungsform gemäss Fig. 2, bei der für gleiche Teile die bereits in Fig. 1 verwendeten Bezugszeichen eingesetzt sind, mündet in die Kammer 3 lediglich die Quelle 9 ein. Ueber einen dichten Verschluss 19 ist der Eingang des Sensors 11 mit dem Inneren des hier mit Oeffnung versehenen Behälters 1 verbunden. Die Auswerteelektronik, dem Sensor 11 nachgeschaltet, ist gleich wie die in Fig. 1 dargestellte.

In Fig. 3 ist analog zu Fig. 2 eine noch weitere Variante dargestellt, bei der mit Bezug auf Fig. 2 die Anordnungen von Quelle 9 und Sensor 11 vertauscht sind.

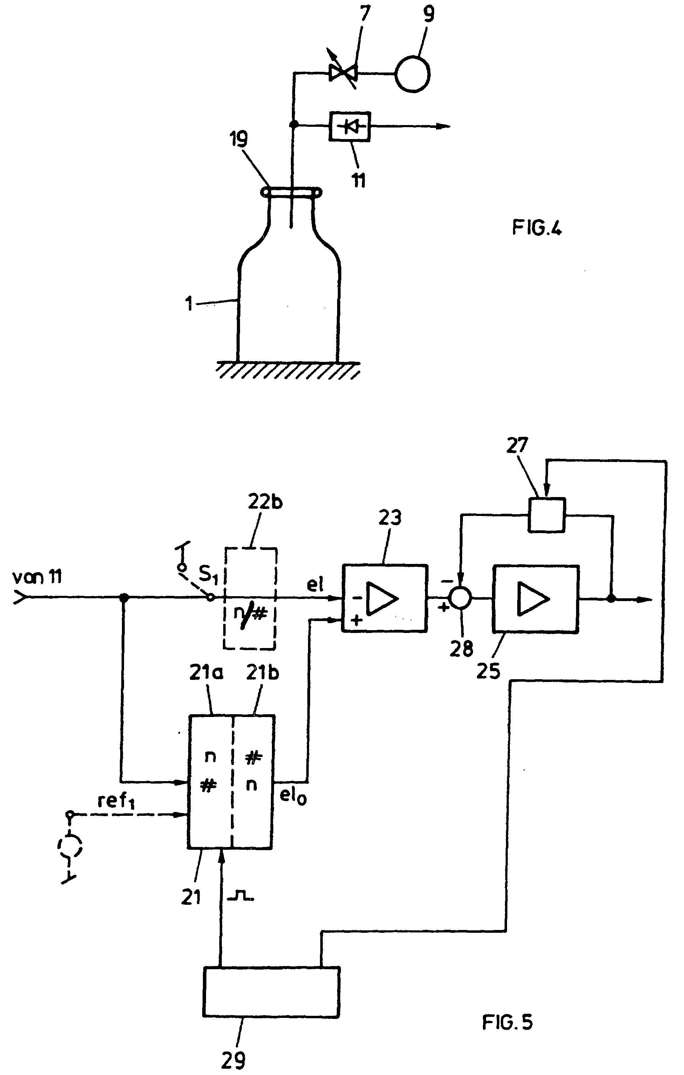

Bei der Anordnung gemäss Fig. 4 mündet einerseits die Quelle 9 über den dichtenden Anschluss 19 ins Innere eines Behältnisses 1 ein, ebenso ist der Eingang des Sensors 11 mit dem Inneren des Behältnisses 1 verbunden. Auch hier ist die anhand von Fig. 1 dargestellte Auswerteelektronik, welcher Sensor 11 zugeschaltet ist, vorgesehen. Bevorzugterweise wird die Ausführungsform nach Fig. 1 oder nach Fig. 4 eingesetzt.

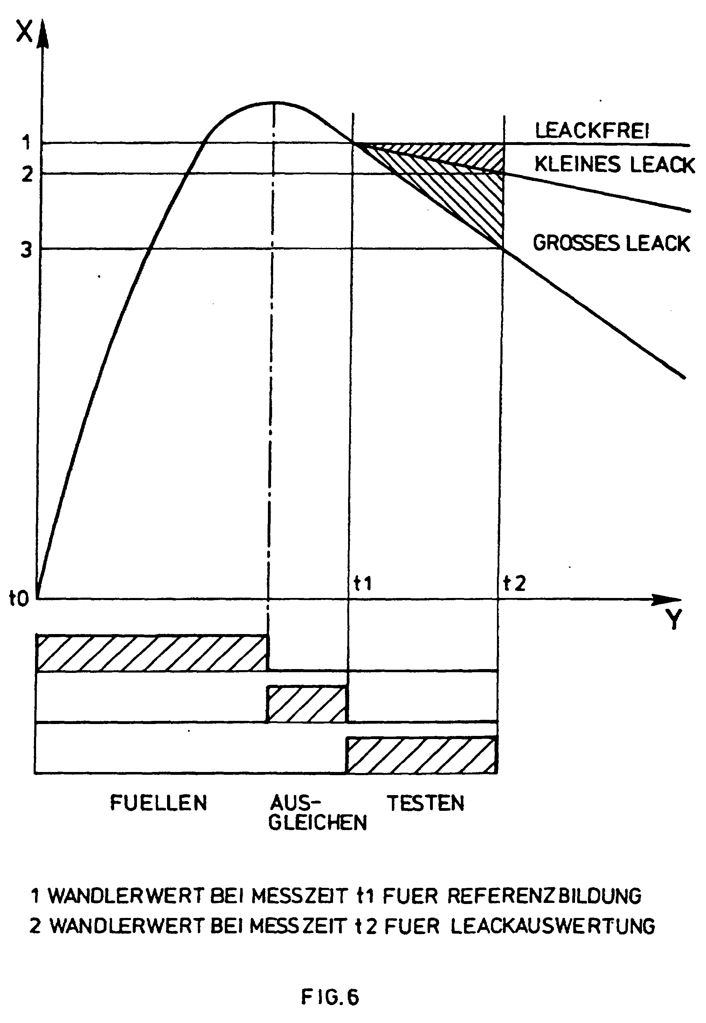

In Fig. 5 ist, in Form eines Blockschaltbildes, eine bevorzugte Realisation der in Fig. 1 gestrichelt teilumrandeten Auswerteeinheit I dargestellt. Das Ausgangssignal des Sensors 11 wird bei der bevorzugten Ausführungsvariante einer Wandlerstufe 21 zugeführt, welche eingangsseitig einen Analog/Digital-Wandler umfasst, 21a, dem unmittelbar nachgeschaltet ein Digital/Analog-Wandler 21b folgt. Der Ausgang des Digital/Analog-Wandlers 21b wird einer auf bekannte Art und Weise aufgebauten Differenzverstärkereinheit 23 zugeführt, ebenso wie das Ausgangssignal des Sensors 11. Der Ausgang der Differenzverstärkereinheit 23, entsprechend der Komparatoreinheit 15 von Fig. 1, ist einer weiteren Verstärkerstufe 25 zugeschaltet, deren Ausgang über ein Speicherelement 27 dem Eingangssignal zum Verstärker 25 überlagert ist, 28.

Die Wandlereinheit 21 wie die Speichereinheit 27 werden durch eine Zeittaktsteuerung 29 gesteuert. Diese Anordnung arbeitet wie folgt:

Zur Abspeicherung des Wertes elₒ gemäss Fig. 1 wird von der Zeitsteuereinheit 29 ein Wandlungszyklus an der Wandlereinheit 21 freigegeben, worauf der Signalwert elₒ am einen Eingang der Differenzverstärkereinheit 23 erscheint. Vorzugsweise im wesentlichen gleichzeitig steuert die Zeitsteuereinheit 29 die Speichereinheit 27 an, womit der Ausgangssignalwert des Verstärkers 25 als Null-Wert-Abgleichssignal an seinen Eingang rückgeführt wird. War das Ausgangssignal des Verstärkers 25 bei Abspeicherung des Wertes elₒ ungleich Null, so wird dieser Signalwert über die Speichereinheit 27 als Null-Kompensationssignal verwendet.

Die Erfassung grosser Lecks, wie dies anhand von Fig. 1 dargelegt wurde, kann auf verschiedene Arten erfolgen, indem beispielsweise der Ausgangssignalwert der Wandlereinheit 21 einem weiteren (nicht dargestellten) Komparator zugespiesen wird, woran er mit dem Referenzsignalwert ref gemäss Fig. 1 verglichen wird oder indem, wie gestrichelt bei S₁ dargestellt, unmittelbar vor oder nach dem Setzen der Speichereinheit 27, vorzugsweise nach deren Setzen, der ansonsten mit dem Sensor 11 verbundene Differenzverstärkereingang auf ein Bezugspotential, wie auf Masse, geschaltet wird und dann ausgangsseitig der Verstärkereinheit 25 der Wert von elₒ direkt daraufhin geprüft wird, ob er einen Referenzwert gemäss ref von Fig. 1 erreicht hat oder nicht.

Abweichend von der dargestellten bevorzugten Ausführungsform ist es ohne weiteres möglich, die zweite Wandlerstufe, nämlich den Digital/Analog-Wandler 21b, wegzulassen und dafür, wie gestrichelt bei 22b dargestellt, einen Analog/Digital-Wandler vorzusehen und dann beide Signale, d.h. elₒ und el digital weiterzuverarbeiten.

Für die Volumenprüfung werden entweder an der vorgesehenen Wandlereinheit 21 Volumenreferenzwerte, wie gestrichelt bei ref₁ dargestellt, voreingegeben, oder es wird ein weiterer Digitalspeicher direkt mit dem Digital/Analog-Wandler 21b verbunden, um eingegebene digitale Volumenreferenzwerte in entsprechende analoge Signale zu wandeln und um dann mit der dargestellten Anordnung auch die Volumenmessung vornehmen zu können.

Die dargestellte Anlage eignet sich ausserordentlich gut für die in-line-Prüfung von Behältnissen wie an einem Karussellförderer, z.B. von Flaschen, Kunststoffflaschen etc.

Grundsätzlich besteht auch die Möglichkeit, nachdem ein vorgegebener Prüfdruck erreicht ist, das elektrische Ausgangssignal des Sensors mit diesem oder mehreren voreingegebenen Werten zu vergleichen, was z.B. an einem Rechner erfolgen kann, wo der Sensorausgang eingelesen wird. Die Differenz zum eingestellten Prüfdruck, d.h. der Druckabfall wird rechnerisch ermittelt (mit im Rechner eingegebenem Grenzwert oder mit einer über Referenzleck ermittelten Grösse verglichen).

## Patentansprüche

1. Verfahren zur Herstellung vorgegebenen Prüfbedingungen genügender Behältnisse (1) bei dem ein Behältnis (1) einem Differenzdruck zwischen einem Druck im Innern des Behältnisses (1) und einen Druck in seiner Umgebung ausgesetzt wird und aus dem Verhalten eines der Drücke geschlossen wird, ob das Behältnis den Prüfbedingungen genügt, wobei ein dem einen der Drücke entsprechendes elektrisches Signal (11) erst abgespeichert (21) und danach mit dem abgespeicherten Signalwert (elₒ) verglichen wird, **dadurch gekennzeichnet, dass** der Vergleich (23) bereits im Moment (t₁) der Abspeicherung begonnen wird und mithin mit einem minimalen Vergleichsresultat.

2. Verfahren nach Anspruch 1, **dadurch gekennzeichnet, dass** das minimale Vergleichsresultat als Null-Abgleichsignal (27) abgespeichert wird.

3. Verfahren nach Anspruch 2, **dadurch gekennzeichnet, dass** mit dem abgespeicherten Null-Abgleichsignal (27) das minimale Vergleichsresultat zu einem Null-Vergleichsresultat automatisch abgeglichen wird.

4. Verfahren nach einem der Ansprüche 1 bis 3, **dadurch gekennzeichnet, dass** das einem der Drücke entsprechende elektrische Signal mit einem oder mehreren voreingegebenen Werten verglichen wird.

5. Verfahren nach einem der Ansprüche 1 bis 4, **dadurch gekennzeichnet, dass** die Druckdifferenz durch Erhöhen oder Erniedrigen des Druckes im Behältnisinnern erstellt wird und das elektrische Signal dem Innendruck des Behältnisses entspricht.

6. Verfahren nach einem der Ansprüche 1 bis 4, **dadurch gekennzeichnet, dass** der Differenzdruck durch Erhöhen oder Erniedrigen des Druckes im Behältnisinnern erstellt wird und das elektrische Signal dem Behältnisaussendruck entspricht.

7. Verfahren nach einem der Ansprüche 1 bis 4, **dadurch gekennzeichnet, dass** der Differenzdruck durch Erhöhen oder Erniedrigen des Behältnisumgebungsdruckes erstellt wird und das elektrische Signal dem Behältnisinnendruck entspricht.

8. Verfahren nach einem der Ansprüche 1 bis 4, **dadurch gekennzeichnet, dass** der Differenzdruck durch Erhöhen oder Erniedrigen des Behältnisumgebungsdruckes erstellt wird und das elektrische Signal dem Behältnisumgebungsdruck entspricht.

9. Verfahren nach einem der Ansprüche 1 bis 8, **dadurch gekennzeichnet, dass** die Abspeicherung des dem einen der Drücke entsprechenden elektrischen Signals mittels eines in einem vorgegebnen Zeitpunkt (t₁) zur Wandlung freigegebenen analog/digital Wandlers erfolgt.

10. Verfahren nach Anspruch 9, **dadurch gekennzeichnet, dass** das analog/digital gewandelte Signal einer digital/analog Wandlung unterzogen wird und der Vergleich an analogen Signalen durchgeführt wird.

11. Verfahren nach einem der Ansprüche 1 bis 10, **dadurch gekennzeichnet, dass** nach Erstellen des Differenzdruckes die Abspeicherung des elektrischen Signals nach einer vorgegebenen Zeitspanne erfolgt.

12. Verfahren nach Anspruch 11, **dadurch gekennzeichnet, dass** der eine der Drücke innerhalb der Zeitspanne eine Maximalstelle durchläuft.

13. Verfahren nach Anspruch 12, **dadurch gekennzeichnet, dass** eine durchlaufene Maximalstelle durch Widerereichen eines Druckwertes detektiert wird, der sich bereits beim Aufbau des Differenzdruckes einstellte.

## Claims

1. Method of manufacturing receptacles (1) which fulfil predetermined test conditions, in which a receptacle (1) is exposed to a differential pressure between a pressure in the inside of the receptacle (1) and a pressure in its surrounding environment, and a conclusion is drawn, from the behaviour of one of the pressures, as to whether the receptacle fulfils the test conditions, whereby an electrical signal (11) corresponding to one of the pressures is first stored (21) and is then compared with the stored signal value (elₒ),
**characterised in that**
the comparison (23) is started at the moment (t₁) of the storing, and therefore with a minimal comparison result.

2. Method as in claim 1,
**characterised in that**
the minimal comparison result is stored as a zero adjusting signal (27).

3. Method as in claim 2,
**characterised in that**
with the stored zero adjusting signal (27), the minimal comparison result is automatically adjusted to a zero comparison result.

4. Method as in one of claims 1 to 3,
**characterised in that**
the electrical signal corresponding to one of the pressures is compared to one or more pre-entered values.

5. Method as in one of claims 1 to 4,
**characterised in that**
the pressure difference is created by raising or lowering the pressure in the interior of the receptacle, and the electrical signal corresponds to the internal pressure of the receptacle.

6. Method as in one of claims 1 to 4,
**characterised in that**
the differential pressure is created by raising or lowering the pressure in the interior of the receptacle, and the electrical signal corresponds to the external pressure of the receptacle.

7. Method as in one of claims 1 to 4,
**characterised in that**
the differential pressure is created by raising or lowering the ambient pressure of the receptacle, and the electrical signal corresponds to the internal pressure of the receptacle.

8. Method as in one of claims 1 to 4,
**characterised in that**
the differential pressure is created by raising or lowering the ambient pressure of the receptacle, and the electrical signal corresponds to the ambient pressure of the receptacle.

9. Method as in one of claims 1 to 8,
**characterised in that**
the storing of the electrical signal corresponding to one of the pressures is effected by means of an analogue-to-digital converter which is enabled for conversion at a predetermined moment in time (t₁).

10. Method as in claim 9,
**characterised in that**
the signal converted from analogue to digital is subjected to a digital-to-analogue conversion process, and the comparison is carried out on analogue signals.

11. Method as in one of claims 1 to 10,
**characterised in that**,
after the differential pressure is produced, the storing of the electrical signal takes place after a predetermined period of time.

12. Method as in claim 11,
**characterised in that**
one of the pressures passes through a maximum within the period of time.

13. Method as in claim 12,
**characterised in that**
a maximum that has been passed through is detected by re-attaining of a pressure value which already appeared when the differential pressure was being built up.

## Revendications

1. Procédé pour fabriquer des récipients (1) satisfaisant à des conditions de test prédéfinies, selon lequel on soumet un récipient (1) à une pression différentielle entre une pression régnant à l'intérieur dudit récipient (1) et une pression régnant dans son environnement, et à partir du comportement de l'une des pressions, on tire une conclusion pour savoir si le récipient satisfait aux conditions de test, un signal électrique (11) correspondant à l'une des pressions étant tout d'abord mis en mémoire (21) puis comparé à la valeur de signal (elₒ) mise en mémoire,
**caractérisé en ce que** la comparaison (23) commence dès le moment (t₁) de la mise en mémoire, et donc avec un résultat de comparaison minimal.

2. Procédé selon la revendication 1, **caractérisé en ce que** le résultat de comparaison minimal est mis en mémoire comme signal d'égalisation nul (27).

3. Procédé selon la revendication 2, **caractérisé en ce qu'**avec le signal d'égalisation nul (27) mis en mémoire, le résultat de comparaison minimal est automatiquement égalisé pour donner un résultat de comparaison nul.

4. Procédé selon l'une des revendications 1 à 3, **caractérisé en ce que** le signal électrique correspondant à l'une des pressions est comparé à une ou plusieurs valeurs entrées préalablement.

5. Procédé selon l'une des revendications 1 à 4, **caractérisé en ce que** la différence de pression est établie grâce à une augmentation ou une réduction de la pression à l'intérieur du récipient, et le signal électrique correspond à la pression interne du récipient.

6. Procédé selon l'une des revendications 1 à 4, **caractérisé en ce que** la pression différentielle est obtenue grâce à une augmentation ou une réduction de la pression à l'intérieur du récipient, et le signal électrique correspond à la pression externe du récipient.

7. Procédé selon l'une des revendications 1 à 4, **caractérisé en ce que** la pression différentielle est obtenue grâce à une augmentation ou une réduction de la pression ambiante du récipient, et le signal électrique correspond à la pression interne du récipient.

8. Procédé selon l'une des revendications 1 à 4, **caractérisé en ce que** la pression différentielle est établie grâce à une augmentation ou une réduction de la pression ambiante du récipient, et le signal électrique correspond à la pression ambiante du récipient.

9. Procédé selon l'une des revendications 1 à 8, **caractérisé en ce que** la mise en mémoire du signal électrique correspondant à l'une des pressions se fait à l'aide d'un convertisseur analogique/numérique qui est mis en service pour la conversion à un moment prédéfini (t₁).

10. Procédé selon la revendication 9, **caractérisé en ce que** le signal soumis à une conversion analogique/numérique est soumis à une conversion numérique/analogique et la comparaison est effectuée sur des signaux analogiques.

11. Procédé selon l'une des revendications 1 à 10, **caractérisé en ce qu'**après l'établissement de la pression différentielle, la mise en mémoire du signal électrique a lieu après un laps de temps prédéfini.

12. Procédé selon la revendication 11, **caractérisé en ce que** l'une des pressions passe à l'intérieur de ce laps de temps par un point maximal.

13. Procédé selon la revendication 12, **caractérisé en ce qu'**on détecte le passage d'un point maximal grâce au fait qu'on atteint à nouveau une valeur de pression qui était déjà apparue lors de l'établissement de la pression différentielle.
